# EUROPEAN PATENT APPLICATION

(11) **EP 4 340 523 A1**
(43) Date of publication of application: **20.03.2024**
(21) Application number: 23196473.5
(22) Date of filing: 11.09.2023
(51) Int. Cl.: H04W 76/14, H04W 76/10, H04W 72/541, H04W 88/04, H04W 88/06, G01S 19/21

(54) **METHODS FOR MITIGATING COEXISTENCE OF UNCOORDINATED WIRELESS SYSTEMS VIA SIDELINK, NON-TRANSITORY COMPUTER-READABLE MEDIUM AND USER EQUIPMENT**

(30) Priority: 14.09.2022 US 202217932277
(71) Applicant: Apple Inc., Cupertino, CA 95014 (US)
(72) Inventor: IOFFE, Anatoliy S., Sunnyvale (US); SMAINI, Lydi, San Jose (US)
(74) Representative: COPA Copenhagen Patents

(57) **Abstract**

User equipment may transmit and receive wireless signals to and from communication networks. However, in close proximity, transmission signals from a first user equipment may interfere with wireless signals received by a second user equipment. In certain instances, the user equipment may establish a session via peer-to-peer technologies and coordinate timing for communication with the networks. For example, the user equipment may establish a sidelink having a frequency different from a frequency used for communication with the networks. The user equipment may prioritize communication to a first communication network over a second communications network or vice versa. The user equipment may also designate a network connector and relay communication with the networks through the network connector. Additionally or alternatively, the user equipment may share the task of determining a global position. Accordingly, the user equipment may reduce or eliminate signal interference and preserve battery power.

## Description

### BACKGROUND

The present disclosure relates generally to wireless communication, and more specifically to communications with one or more networks between two or more user equipment.

Transmitting or receiving signals with user equipment (e.g., a mobile communication device) may interfere with signals been transmitted or received by another user equipment located in close proximity (e.g., within one to ten meters). For example, a first user equipment may receive first wireless signals from a first communication node while a second user equipment may transmit second wireless signals to a second communication node. However, due to the close proximity of the first and second user equipment, the first and second wireless signals may interfere with one another, thereby resulting in data loss in the first or second wireless signals and/or performance degradation. Thus, the user equipment may not operate desirably to transmit or receive wireless signals.

### SUMMARY

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

In an embodiment, a method may include establishing, via processing circuitry of a first user equipment, communication with a second user equipment on a first frequency and transmitting, via a transmitter of the first user equipment and using the first frequency, a request to the second user equipment for an indication of whether communication on a second frequency is occurring. The method may also establish, via the transmitter and using the second frequency, a connection with a network based on the indication.

In another embodiment, a tangible, non-transitory computer-readable medium, comprising computer-readable instructions that, when executed processing circuitry, are configured to cause the processing circuitry of a first user equipment to establish communication with a second user equipment on a first frequency and transmit, via a transmitter of the first user equipment and using the first frequency, a first request to the second user equipment for an indication of whether communication on a second frequency is occurring. The tangible, non-transitory computer-readable medium, when executed by the processing circuitry, are also configured to cause the processing circuitry of the first user equipment to establish, via the transmitter and using a second frequency, a connection with a network based on the indication.

In yet another embodiment, a user equipment may include one or more antennas, a first receiver and a second receiver coupled to the one or more antennas, a transmitter coupled to one or more antennas; and processing circuitry communicatively coupled to the transmitter and the receiver. The processing circuitry may transmit a first request having a first frequency to establish communication with a first user equipment using the transmitter, transmit a second request having the first frequency to the first user equipment for an indication of whether communication on a second frequency is occurring using the transmitter, and establish a connection having a second frequency with a first communication node based on the indication.

### BRIEF DESCRIPTION OF THE DRAWINGS

Various aspects of this disclosure may be better understood upon reading the following detailed description and upon reference to the drawings described below in which like numerals refer to like parts.
FIG. 1 is a block diagram of user equipment, according to embodiments of the present disclosure;
FIG. 2 is a functional diagram of the user equipment of FIG. 1, according to embodiments of the present disclosure;
FIG. 3 is a schematic diagram of two or more user equipment of FIG. 1 communicating with transmitting or receiving wireless signals with a communication node, according to embodiments of the present disclosure;
FIG. 4 is a flowchart of a method for the two or more user equipment of FIG. 3 to communicate with one or more networks by implementing a back off and wait technique, according to embodiments of the present disclosure;
FIG. 5 is a flowchart of a method for the two or more user equipment of FIG. 3 to communicate with the one or more networks by prioritizing a network, according to embodiments of the present disclosure;
FIG. 6 is a flowchart of a method for the two or more user equipment of FIG. 3 to communicate with the network by relaying wireless signals through a network connector, according to embodiments of the present disclosure; and
FIG. 7 is a flowchart of a method for the two or more user equipment of FIG. 3 to coordinate and share a global navigation satellite system (GNSS) acquisition process, according to embodiments of the present disclosure.

### DETAILED DESCRIPTION OF SPECIFIC EMBODIMENTS

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "comprising," "including," and "having" are intended to be inclusive and mean that there may be additional elements other than the listed elements. Additionally, it should be understood that references to "one embodiment" or "an embodiment" of the present disclosure are not intended to be interpreted as excluding the existence of additional embodiments that also incorporate the recited features. Furthermore, the particular features, structures, or characteristics may be combined in any suitable manner in one or more embodiments. Use of the terms "approximately," "near," "about," "close to," and/or "substantially" should be understood to mean including close to a target (e.g., design, value, amount), such as within a margin of any suitable or contemplatable error (e.g., within 0.1 % of a target, within 1% of a target, within 5% of a target, within 10% of a target, within 25% of a target, and so on). Moreover, it should be understood that any exact values, numbers, measurements, and so on, provided herein, are contemplated to include approximations (e.g., within a margin of suitable or contemplatable error) of the exact values, numbers, measurements, and so on. Additionally, the term "set" may include one or more. That is, a set may include a unitary set of one member, but the set may also include a set of multiple members.

This disclosure is directed to systems and techniques for transmitting and receiving wireless signals to and from a network (e.g., global navigation satellite system, a terrestrial network, a non-terrestrial network, or any other suitable wireless communication network) via a communication node (e.g., a base station, an access point, a terrestrial station, a non-terrestrial station, a ground station, a satellite, a high-altitude platform station, and so on). For example, two or more user equipment may be within close proximity (e.g., within ten meters) of one another and individually attempt to communicate with a network supported by a communication node. For example, a first user equipment may receive first wireless signals from a first communication network while a second user equipment may transmit second wireless signals to a second communication network. However, during communication, the second wireless signals (e.g., transmission signals) from the second user equipment may interfere with the first wireless signals (e.g., receive signals) received by the first user equipment due to the close proximity between the first and second user equipment. Data loss of the first wireless signals may result the first user equipment spending time, processing resources, network resources, and battery power to continuously search and/or attempt to receive the first wireless signals from the first communication network. Accordingly, two or more user equipment may experience performance degradation when transmitting or receiving wireless signals to and from the networks while in close proximity of one another.

Instead, various apparatuses and techniques are disclosed for coordinating communication timing between two or more user equipment by leveraging a sidelink, which may employ a peer-to-peer or device-to-device technology. For example, user equipment may utilize Wi-Fi, Wi-Fi Direct, Bluetooth, Apple AirPlay^{®}, ultrawideband, near field communication, or another sidelink technology to communicate with other (e.g., neighboring or adjacent) user equipment and coordinate timing for communicating with one or more networks, thereby reducing or eliminating signal interference between the user equipment. In particular, communication via the sidelink may utilize different frequency bands from those used for communicating (e.g., transmitting wireless signals, receiving wireless signals) with the communication network. In this way, communication between the user equipment and communication with the network (e.g., supported by one or more communication nodes) may occur in parallel.

By way of example, two or more user equipment may establish a peer-to-peer session (e.g., a sidelink) prior to communicating with one or more communication networks. A first user equipment and a second user equipment may mutually discover each other and exchange configuration parameters (e.g., encrypted information, timing information, network connector, a mode) to establish the sidelink. Additionally or alternatively, the first user equipment may receive an indication to communicate with a second communication network. In an embodiment, the first user equipment may send a request via the sidelink to the second user equipment to determine whether communication with a first communication network is being performed. In this way, the first user equipment may reduce or eliminate signal interference caused by transmitting or receiving wireless signals to and from the networks while in close proximity to the second user equipment. If the second user equipment sends an indication via the sidelink that communication with the first communication network is currently being performed, then the first user equipment may wait for a period of time. After the period of time, the first user equipment may send another request via the sidelink to the second user equipment to determine whether communication with the first communication network is being performed. If the second user equipment sends an indication via the sidelink that communication with the first communication network is not being performed, then the first user equipment may start communication with a second communication network in response to receiving the indication. In another embodiment, the second user equipment may terminate communication with the first communication network in response to receiving the request and send an indication via the sidelink to the first user equipment that communication with the first communication network is not being performed. In this way, the user equipment may prioritize communication with the second communication network. As such, the disclosed embodiments may coordinate timing of communication with the networks (e.g., first communication network, second communication network) to reduce or eliminate signal interference (e.g., crosstalk) between the user equipment.

In certain instances, the first user equipment may be designated as a network connector and relay a network connection to the second user equipment. For example, the first user equipment may establish a connection to the second communication network, and the second user equipment may communicate with the second communication network through first user equipment over the sidelink. The second user equipment may transmit a first wireless signal to the first user equipment and the first user equipment may relay the first wireless signal to the second communication network. Then, the second communication network may transmit a second wireless signal to the first user equipment and the first user equipment may transmit the second wireless signal to the second user equipment. In other words, the first user equipment may relay signals between the second user equipment and the second communication network.

In certain embodiments, the two or more of user equipment may share a task of determining a global position of the user equipment by individually communicating with the first communication node and sharing the received wireless signals. For example, the first communication network may include a global navigation satellite system (GNSS) supported by one or more GNSS satellite(s). The first user equipment may receive a first wireless signal (e.g., GNSS signal) from a GNSS satellite and the second user equipment may receive a second wireless signal (e.g., GNSS signal) from the GNSS satellite (e.g., same GNSS satellite, different GNSS satellite). The user equipment may each share their received wireless signals via the sidelink and individually establish the global position based on the shared wireless signals. In this way, the two or more user equipment may reduce battery usage by reducing or eliminating repeated communications with the first communication network. In certain instances, the second user equipment may share the received wireless signal with the first user equipment and the first user equipment may determine the global position based on the received wireless signals (e.g., received by the first user equipment, shared by the second user equipment). Then, the first user equipment may share the global position with the second user equipment via the sidelink. In this way, the second user equipment may save battery power by avoiding determining the global position.

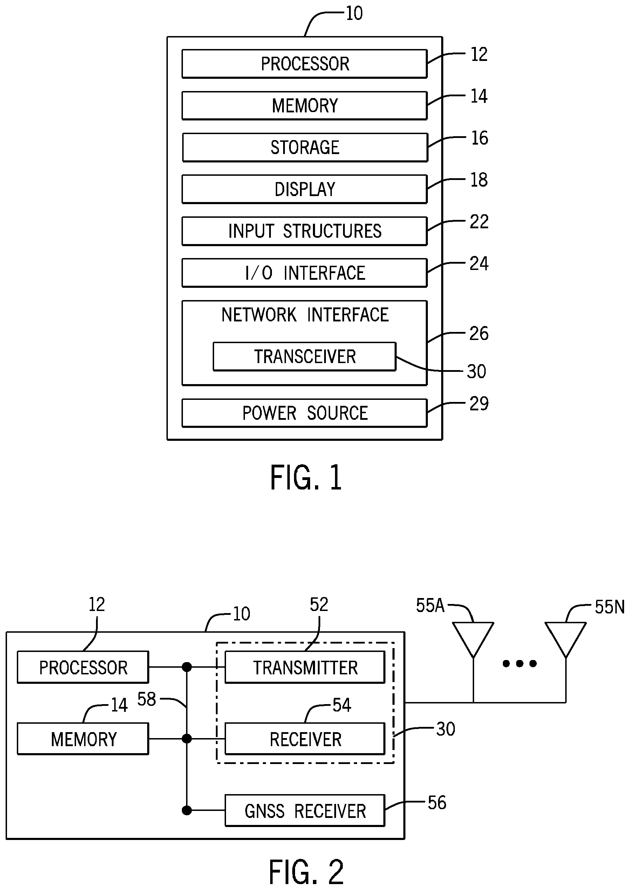

FIG. 1 is a block diagram of user equipment 10 (e.g., an electronic device, wireless communication device, a mobile device), according to embodiments of the present disclosure. The user equipment 10 may include, among other things, one or more processors 12 (collectively referred to herein as a single processor for convenience, which may be implemented in any suitable form of processing circuitry), memory 14, nonvolatile storage 16, a display 18, input structures 22, an input/output (I/O) interface 24, a network interface 26, and a power source 29. The various functional blocks shown in FIG. 1 may include hardware elements (including circuitry), software elements (including machine-executable instructions) or a combination of both hardware and software elements (which may be referred to as logic). The processor 12, memory 14, the nonvolatile storage 16, the display 18, the input structures 22, the input/output (I/O) interface 24, the network interface 26, and/or the power source 29 may each be communicatively coupled directly or indirectly (e.g., through or via another component, a communication bus, a network) to one another to transmit and/or receive signals between one another. It should be noted that FIG. 1 is merely one example of a particular implementation and is intended to illustrate the types of components that may be present in the user equipment 10.

By way of example, the user equipment 10 may include any suitable computing device, including a desktop or notebook computer (e.g., in the form of a MacBook^{®}, MacBook^{®} Pro, MacBook Air^{®}, iMac^{®}, Mac^{®} mini, or Mac Pro^{®} available from Apple Inc. of Cupertino, California), a portable electronic or handheld user equipment such as a wireless electronic device or smartphone (e.g., in the form of a model of an iPhone^{®} available from Apple Inc. of Cupertino, California), a tablet (e.g., in the form of a model of an iPad^{®} available from Apple Inc. of Cupertino, California), a wearable electronic device (e.g., in the form of an Apple Watch^{®} by Apple Inc. of Cupertino, California), and other similar devices. It should be noted that the processor 12 and other related items in FIG. 1 may be embodied wholly or in part as software, hardware, or both. Furthermore, the processor 12 and other related items in FIG. 1 may be a single contained processing module or may be incorporated wholly or partially within any of the other elements within the user equipment 10. The processor 12 may be implemented with any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable entities that may perform calculations or other manipulations of information. The processors 12 may include one or more application processors, one or more baseband processors, or both, and perform the various functions described herein.

In the user equipment 10 of FIG. 1, the processor 12 may be operably coupled with a memory 14 and a nonvolatile storage 16 to perform various algorithms. Such programs or instructions executed by the processor 12 may be stored in any suitable article of manufacture that includes one or more tangible, computer-readable media. The tangible, computer-readable media may include the memory 14 and/or the nonvolatile storage 16, individually or collectively, to store the instructions or routines. The memory 14 and the nonvolatile storage 16 may include any suitable articles of manufacture for storing data and executable instructions, such as random-access memory, read-only memory, rewritable flash memory, hard drives, and optical discs. In addition, programs (e.g., an operating system) encoded on such a computer program product may also include instructions that may be executed by the processor 12 to enable the user equipment 10 to provide various functionalities.

In certain embodiments, the display 18 may facilitate users to view images generated on the user equipment 10. In some embodiments, the display 18 may include a touch screen, which may facilitate user interaction with a user interface of the user equipment 10. Furthermore, it should be appreciated that, in some embodiments, the display 18 may include one or more liquid crystal displays (LCDs), light-emitting diode (LED) displays, organic light-emitting diode (OLED) displays, active-matrix organic light-emitting diode (AMOLED) displays, or some combination of these and/or other display technologies.

The input structures 22 of the user equipment 10 may enable a user to interact with the user equipment 10 (e.g., pressing a button to increase or decrease a volume level). The I/O interface 24 may enable the user equipment 10 to interface with various other electronic devices, as may the network interface 26. In some embodiments, the I/O interface 24 may include an I/O port for a hardwired connection for charging and/or content manipulation using a standard connector and protocol, such as the Lightning connector provided by Apple Inc. of Cupertino, California, a universal serial bus (USB), or other similar connector and protocol. The network interface 26 may include, for example, one or more interfaces for a personal area network (PAN), such as an ultra-wideband (UWB) or a BLUETOOTH^{®} network, a local area network (LAN) or wireless local area network (WLAN), such as a network employing one of the IEEE 802.11x family of protocols (e.g., WI-FIO), and/or a wide area network (WAN), such as any standards related to the Third Generation Partnership Project (3GPP), including, for example, a 3rd generation (3G) cellular network, universal mobile telecommunication system (UMTS), 4th generation (4G) cellular network, long term evolution (LTE^{®}) cellular network, long term evolution license assisted access (LTE-LAA) cellular network, 5th generation (5G) cellular network, and/or New Radio (NR) cellular network, a 6th generation (6G) or greater than 6G cellular network, a satellite network, a non-terrestrial network, and so on. In particular, the network interface 26 may include, for example, one or more interfaces for using a cellular communication standard of the 5G specifications that include the millimeter wave (mmWave) frequency range (e.g., 24.25-300 gigahertz (GHz)) that defines and/or enables frequency ranges used for wireless communication. The network interface 26 of the user equipment 10 may allow communication over the aforementioned networks (e.g., 5G, Wi-Fi, LTE-LAA, and so forth).

The network interface 26 may also include one or more interfaces for, for example, broadband fixed wireless access networks (e.g., WIMAX^{®}), mobile broadband Wireless networks (mobile WIMAX^{®}), asynchronous digital subscriber lines (e.g., ADSL, VDSL), digital video broadcasting-terrestrial (DVB-T^{®}) network and its extension DVB Handheld (DVB-H^{®}) network, ultra-wideband (UWB) network, alternating current (AC) power lines, and so forth.

As illustrated, the network interface 26 may include a transceiver 30. In some embodiments, all or portions of the transceiver 30 may be disposed within the processor 12. The transceiver 30 may support transmission and receipt of various wireless signals via one or more antennas, and thus may include a transmitter and a receiver. The power source 29 of the user equipment 10 may include any suitable source of power, such as a rechargeable lithium polymer (Li-poly) battery and/or an alternating current (AC) power converter.

FIG. 2 is a functional diagram of the user equipment 10 of FIG. 1, according to embodiments of the present disclosure. As illustrated, the processor 12, the memory 14, the transceiver 30, a transmitter 52, a receiver 54, and/or antennas 55 (illustrated as 55A-55N, collectively referred to as an antenna 55) may be communicatively coupled directly or indirectly (e.g., through or via another component, a communication bus, a network) to one another to transmit and/or receive signals between one another.

The user equipment 10 may include the transmitter 52 and/or the receiver 54 that respectively enable transmission and reception of signals between the user equipment 10 and an external device via, for example, a network (e.g., including base stations or access points) or a direct connection. As illustrated, the transmitter 52 and the receiver 54 may be combined into the transceiver 30. The user equipment 10 may also have one or more antennas 55A-55N electrically coupled to the transceiver 30. The antennas 55A-55N may be configured in an omnidirectional or directional configuration, in a single-beam, dual-beam, or multi-beam arrangement, and so on. Each antenna 55 may be associated with a one or more beams and various configurations. In some embodiments, multiple antennas of the antennas 55A-55N of an antenna group or module may be communicatively coupled a respective transceiver 30 and each emit radio frequency signals that may constructively and/or destructively combine to form a beam. The user equipment 10 may include multiple transmitters, multiple receivers, multiple transceivers, and/or multiple antennas as suitable for various communication standards. For example, the transmitter 52 may be configured to transmit wireless signals to a communication node and the receiver 54 may be configured to receive wireless signals from the communication node. In some embodiments, the transmitter 52 and the receiver 54 may transmit and receive information via other wired or wireline systems or means.

Additionally or alternatively, the user equipment 10 may include a GNSS receiver 56 that may enable the user equipment 10 to receive GNSS signals from a GNSS network supported by one or more GNSS satellites or GNSS ground stations. The GNSS signals may include GNSS satellite's observation data, broadcast orbit information of tracked GNSS satellites, and supporting data, such as meteorological parameters, collected from co-located instruments of a GNSS satellite. For example, the GNSS signals may be received from a Global Positioning System (GPS) network, a Global Navigation Satellite System (GLONASS) network, a BeiDou Navigation Satellite System (BDS), a Galileo navigation satellite network, a Quasi-Zenith Satellite System (QZSS or Michibiki) and so on. The user equipment 10 may process the GNSS signals to determine a global position of the user equipment 10.

As illustrated, the various components of the user equipment 10 may be coupled together by a bus system 58. The bus system 58 may include a data bus, for example, as well as a power bus, a control signal bus, and a status signal bus, in addition to the data bus. The components of the user equipment 10 may be coupled together or accept or provide inputs to each other using some other mechanism.

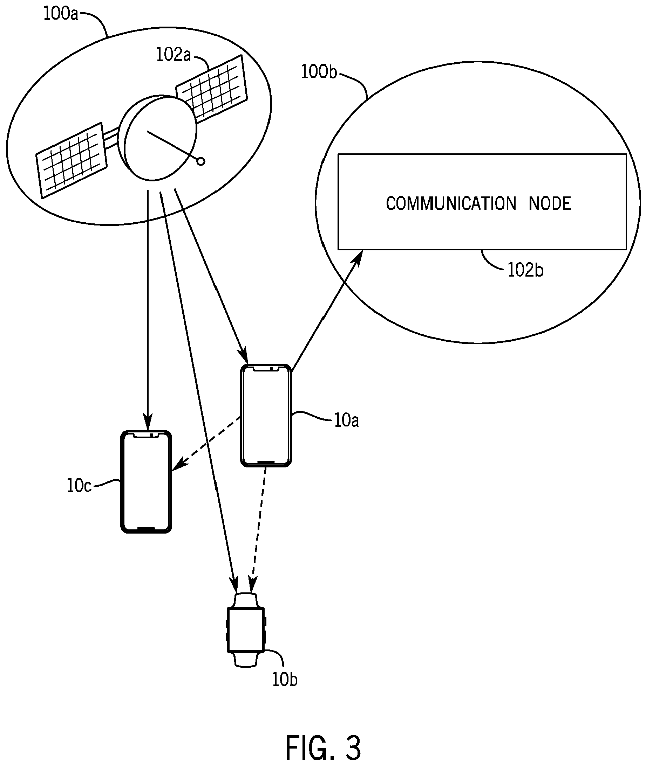

FIG. 3 is a schematic diagram of two or more user equipment 10 communicating (e.g., transmitting wireless signals, receiving wireless signals) with a first communication network 100a and/or a second communication network 100b supported by a first communication node 102a and a second communication node 102b, respectively, according to embodiments of the present disclosure. In the illustrated example, a first user equipment 10a, a second user equipment 10b, and a third user equipment 10c (collectively referred to as user equipment 10) may be located within close proximity (e.g., within 10 meters (m)) to each other and each user equipment 10 may attempt communication with a first communication network 100a and/or a second communication network 100b (collectively referred to as communication network 100). For example, close proximity between two user equipment 10 may be any distance that the communications of the transceiver 30 of a first user equipment 10 may interfere with communications of a second user equipment 10. The communication network 100 may include a GNSS network, a terrestrial network, a non-terrestrial network, or any other suitable wireless communication network. Each communication network 100 may include multiple communication nodes 102 communicatively coupled together to form the respective network 100. For example, the first communication network 100a may include one or more communicatively coupled first communication nodes 102a and the second communication network 100b may include one or more communicatively coupled second communication nodes 102b. The first communication node 102a and the second communication node 102b (collectively referred to as communication node 102) may include terrestrial base stations, non-terrestrial base stations, satellites, high-altitude platform stations, airborne base stations, space borne base stations, a satellite, or any other suitable nonstationary or stationary communication devices, communicatively coupled to the user equipment 10. For example, the communication node 102 may include base stations, such as Next Generation NodeB (gNodeB or gNB) base stations that provide 5G/NR coverage to the user equipment 10, Evolved NodeB (eNodeB) base stations and may provide 4G/LTE coverage to the user equipment 10, and so on.

In the illustrated example, the first communication node 102a includes a GNSS satellite supporting a GNSS network. The GNSS satellite 102a may broadcast or transmit one or more wireless signals (e.g., GNSS signals) indicative of timing data, discovery satellite codes, satellite observation data, broadcast orbit information of tracked GNSS satellites, and/or supporting data. The user equipment 10 may perform a GNSS acquisition process to determine a global position. For example, the user equipment 10 may be configured to receive one or more GNSS signals via the GNSS receiver 56 to determine a global position (e.g., location) of the user equipment 10. Depending on a time and a position of the GNSS satellite 102a, the user equipment 10 may receive the one or more GNSS signals over a period of time. Furthermore, the global position may be more precise as additional GNSS signals are received by the user equipment 10. For example, the user equipment 10 may receive a first signal, a second signal, and continuously search for a third signal to determine the global position. In certain instances, the user equipment 10 may not receive the third signal due to a blockage or a signal interference. As such, the user equipment 10 may repeatedly search for the third signal to determine the global position. As a result, the GNSS acquisition process may be both a time-consuming and a power-consuming operation for the user equipment 10.

Additionally or alternatively, the user equipment 10 may communicate with the second communication network 100b supported by the second communication node 102b (e.g., using the transceiver 30). As described herein, the second communication node 102b may include a terrestrial base station, a non-terrestrial base station, a satellite, a high-altitude platform station, or any suitable stationary or nonstationary communication device communicatively coupled to the user equipment 10. The user equipment 10 may transmit or receive a wireless signal associated with one of various forms of communication, such as emergency text messaging, emergency voice calling, acknowledgement messaging, video streaming, Internet browsing, and so forth. To transmit the wireless signal, the user equipment 10 may follow a procedure related to the second communication node 102b to determine associated timing and location data of the second communication node 102b. In another example, the user equipment 10 may transmit a wireless signal to the second communication node 102b to establish a communication link used for communicating with the second communication network 100b. For instance, the user equipment 10 may transmit a signal to establish communicative coupling with a random-access channel (RACH) for data transmission (e.g., call set-up, burst data transmission, other uplink communication from the user equipment 10 to the second communication network 100b) with the second communication node 102b.

In certain instances, the user equipment 10 may store information associated with successful communication with the first communication network 100a and/or the second communication network 100b. By way of example, the user equipment 10 may store an elevation angle, a transmission power, a signal quality, receive or transmit signal timing information, and/or other information associated with the communication. In this way, the user equipment 10 may perform an abbreviated data transmission operation that may include fewer initial signal or data exchanges with the communication nodes 100.

In certain instances, two or more user equipment 10 may attempt to communicate with the first communication network 100a and the second communication 100b at a same time (e.g., concurrently or simultaneously). For example, two or more user equipment 10 may be located in close proximity, such as within a range of ten meters (m). For example, a first user equipment 10a may be located five m away from a second user equipment 10b that is located one m away from a third user equipment 10c. Due to the close proximity, signal interference between the user equipment 10 may occur. For example, wireless signals (e.g., transmission signals) from the transceiver 30 of the first user equipment 10a may interfere with wireless signals (e.g., received signals) of the second user equipment 10b and/or wireless signals (e.g., received signals) of the third user equipment 10c.

As illustrated, the first user equipment 10a, the second user equipment 10b, and the third user equipment 10c may receive one or more GNSS signals (e.g., GNSS link resources) from the first communication network 100a for a period of time. The GNSS signals from the first communication node 102a may have a first frequency within a first frequency band (e.g., an L1 frequency band of 1550-1600 MHz, an L2 frequency band of 1200-1300MHz, and/or an L5 frequency band of 1100-1200MHz, or any other frequency band applicable to GNSS). During the period of time, the first user equipment 10a may also transmit a signal to the second communication node 102b in a second frequency which might be in close proximity to the GNSS band used by user equipment 10a or otherwise in a frequency band which might emit unwanted interference into the GNSS band used by the user equipment 10a. Due to the proximity in frequency of the first frequency and the second frequency, as well as the close proximity of the user equipment 10a-c, unwanted transmission emissions from the first user equipment 10a may be received at the GNSS receiver 56 of the second user equipment 10b and/or the third user equipment 10c, thereby causing data loss and/or performance degradation of GNSS signals. For example, unwanted transmission emissions from the second user equipment 10b may be received at the GNSS receiver 56 of the first user equipment 10a and/or the third user equipment 10c. In other words, crosstalk between the user equipment 10 may occur due to overlapping timing of communication with the networks 100 and the close proximity of the user equipment 10a-c.

To reduce or eliminate crosstalk between the user equipment 10a-c, timing of the communications may be coordinated between the user equipment 10a-c. For example, the user equipment 10a-c may establish a peer-to-peer session (e.g., a side link) via peer-to-peer or device-to-device technologies (e.g., Bluetooth, Wi-Fi, Wi-Fi Direct, Apple AirPlay^{®}, ultrawideband, near field communication, or another sidelink technology) to communicate with other (e.g., neighboring or adjacent) user equipment 10 and coordinate timing for communicating with the communication networks 100. Communication through the sidelink may utilize a third frequency (e.g., a sidelink frequency) different from the first frequency or second frequency used to communicate with the communication networks 100. For example, the sidelink frequency may leverage Wi-Fi or Bluetooth^{®}, utilizing a third frequency band of 2-6 gigahertz (GHz), which may not interfere with the first frequency or the second frequency. Advantageously, communication between user equipment 10 through the sidelink may occur in parallel with communication with the networks 100. Further, it may be beneficial to use a higher frequency for communications between user equipment 10a-c due to the close proximity of the user equipment 10a-c. In this way, the user equipment 10a-c may coordinate timing of communication with the first communication network 100a and/or the second communication network 100b and reduce or eliminate crosstalk between the user equipment 10a-c.

While the illustrated example includes three user equipment 10, any suitable number of user equipment 10 may establish the sidelink and coordinate timing of communication with the communication networks 100. Furthermore, there may be any suitable number of communication nodes 102 communicatively coupled to form the communication network 100 and any suitable number of communication nodes 102 may be communicatively coupled to the user equipment 10. For example, the user equipment 10 may receive wireless signals from three or more, four or more, five or more, eight or more, and so on, communication nodes 102.

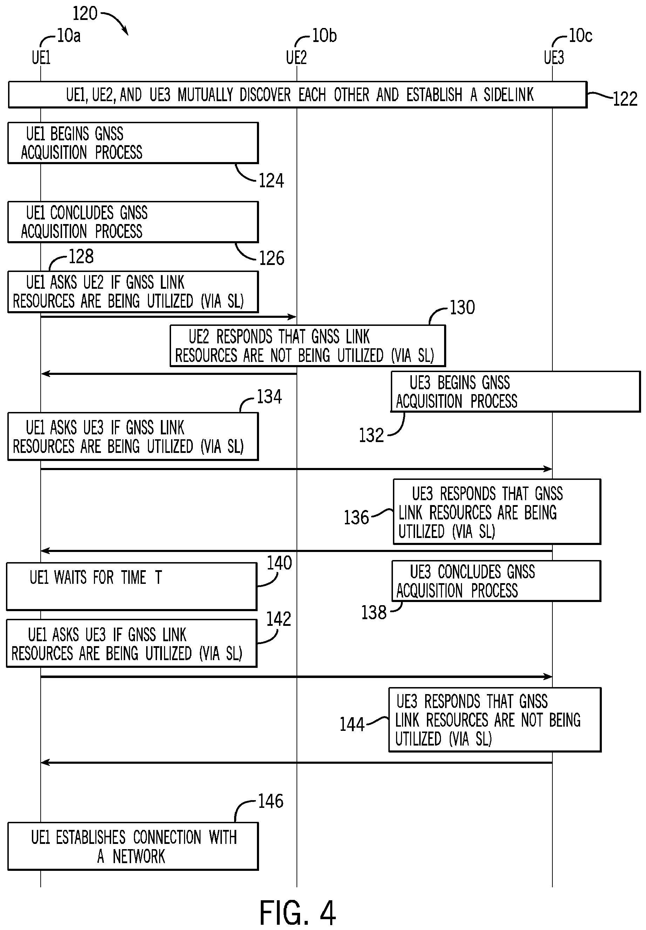

With the foregoing in mind, FIG. 4 is a flowchart of a method 120 for the two or more user equipment 10 to communicate with one or more networks 100 by implementing a back off and wait technique, according to embodiments of the present disclosure. In certain instances, the first user equipment 10a may receive an indication to communicate with the second communication network 100b (e.g., executing a software application on the first user equipment 10a that uses the second communication network 100b, initiating a transmission or reception of a signal via the second communication network 100b, and so on). Before initiating communication with the second communication network 100b, the first user equipment 10a may send a request to each neighboring user equipment (e.g., second user equipment 10b, third user equipment 10c) to determine if communication with the first communication network 100a is being performed by the respective neighboring user equipment. If the first user equipment 10a receives an indication that communication with the first communication network 100a is not being performed by the respective neighboring user equipment, then the first user equipment 10 may communicate with the second communication network 100b. However, if communication with the first communication network 100a is being performed by the respective neighboring user equipment, then the first user equipment 10 may "back off" and wait for a period of time. In other words, the first user equipment 10a may delay communications to the second communication network 100b to reduce or eliminate signal interference caused by the close proximity of the user equipment 10a-c. Accordingly, timing of communications may be staggered between the user equipment 10a-c may improve user equipment 10a-c performance.

Any suitable device (e.g., a controller) that may control components of the user equipment 10, such as the processor 12, may perform the method 120. In some embodiments, the method 120 may be implemented by executing instructions stored in a tangible, non-transitory, computer-readable medium, such as the memory 14 or storage 16, using the processor 12. For example, the method 120 may be performed at least in part by one or more software components, such as an operating system of the user equipment 10, one or more software applications of the user equipment 10, and the like. While the method 120 is described using steps in a specific sequence, it should be understood that the present disclosure contemplates that the described steps may be performed in different sequences than the sequence illustrated, and certain described steps may be skipped or not performed altogether.

In process block 122, the first user equipment 10a, the second user equipment 10b, and the third user equipment 10c mutually discover each other and establish a sidelink (e.g., a sidelink session, communication via sidelink). For example, the user equipment 10 may mutually discover each other via a peer-to-peer or device-to-device technology (Wi-Fi, Wi-Fi Direct, Bluetooth, Apple AirPlay^{®}, ultrawideband, near field communication, or another sidelink technology). In particular, peer-to-peer or device-to-device technologies may allow the user equipment 10 to communicate without an intermediary or an intervening device, such as a base station, an access point, a communication node, or the like. Further, the communication may occur on the side link band (e.g., third frequency band of 2-6 GHz).

For example, the first user equipment 10a may scan for neighboring or adjacent user equipment 10 within a predetermined area. In another example, the first user equipment 10a and the second user equipment 10b may be connected to the same communication network (e.g., a Wi-Fi network), allowing the first user equipment 10a to discover the second user equipment 10b. Still in another example, the first user equipment 10a may receive user input allowing the first user equipment 10a to be discovered by neighboring user equipment 10 via a local network (e.g., an Apple AirPlay^{®} network, an Apple AirDrop^{®} network, a UWB network, etc.).

After discovering neighboring user equipment 10, the first user equipment 10a may request that the second user equipment 10b establish the sidelink. For example, the first user equipment 10a may list multiple neighboring user equipment 10 on the display 18 and receive an indication to establish the sidelink with the second user equipment 10b. As such, the first user equipment 10a may send an indication to the second user equipment 10b using the sidelink frequency band. In response to receiving the indication, the second user equipment 10b may display a notification (e.g., a window, a pop-up, a prompt, and so on) on the display 18 asking for user input to establish the sidelink. If the second user equipment 10b receives indication to establish the sidelink, then the first user equipment 10a and the second user equipment 10b may utilize the sidelink frequency band for communication (e.g., transmitting wireless signals, receiving wireless signals) between the user equipment 10 and share one or more configuration parameters (e.g., encrypted data, timing data, network connector, a period of time T, a prioritized network). In another example, the first user equipment 10a and the second user equipment 10b may have previously established the sidelink and/or shared configuration parameters. As such, the sidelink may be established when the first user equipment 10a and the second user equipment 10b are located in close proximity (e.g., within communication range of one another).

In certain instances, the user equipment 10 may receive an indication to determine its global position (e.g., location) and/or to communicate with the networks 100. In process block 124, the first user equipment 10a begins the GNSS acquisition process. For example, the first user equipment 10a may receive an indication to determine its global position. As such, the first user equipment 10a may communicate with the first communication network 100a and receive one or more wireless signals for determining the global position. As described herein, the first communication node 102a may broadcast one or more wireless signals (e.g., GNSS signals), and the first user equipment 10a may receive the one or more GNSS signals via the GNSS receiver 56. In certain instances, the first user equipment 10a may receive multiple GNSS signals over a period of time to determine and/or refine the global position, which may be a time-consuming and power-consuming process. After the period of time, the first user equipment 10a may conclude the GNSS acquisition process, in process block 126. The first user equipment 10a may process the received GNSS signals to determine the global position. Since the two or more of user equipment 10 may be located in close proximity, the global position determined by the first user equipment 10a may be the same or similar as that of the second user equipment 10b and/or the third user equipment 10c.

In process block 128, the first user equipment 10a sends a request to the second user equipment 10b via sidelink to determine if GNSS link resources are being utilized. For example, the first user equipment 10a may receive an indication to communicate with the second communication network 100b. As such, it may beneficial to determine if neighboring user equipment 10 are communicating with the first communication network 100a before initiating communication with the second communication network 100b to reduce or eliminate performance degradation, as communication with the second communication network 100b may interfere with communication with the first communication network 100a. For example, the first user equipment 10a may send a request using the sidelink to the second user equipment 10b to determine if the second user equipment 10b is communicating with the first network 100a. The second user equipment 10b may then determine if its GNSS receiver 56 is performing operations, such as receiving communication from the first communication network 100a. In another example, the second user equipment 10b may determine if operations requested or initiated by user executed software applications on the user equipment 10 may utilize global position data, such as receiving directions on a map software application. Still, in response to receiving the request, the second user equipment 10b may display a notification on the display 18 to receive an indication of whether communication with the first communication network 100a are being performed.

In process block 130, the second user equipment 10b responds via sidelink that GNSS link resources are not being utilized. For example, the second user equipment 10b may determine that the GNSS receiver 56 may not be performing operations and send an indication using the sidelink frequency band to the first user equipment 10a indicating that communication with the first communication network 100a is not occurring. In another example, the second user equipment 10b may receive an indication (e.g., from its processor 12, a user indication, or the like) that communication with the first communication network 100a is not being performed and send the indication using the sidelink frequency band to the first user equipment 10a indicating that communication with the first communication network 100a is not occurring.

In process block 132, the third user equipment 10c begins the GNSS acquisition process. For example, the third user equipment 10c may receive an indication from one or more software applications of the user equipment 10 requesting global positioning data. As such, the third user equipment 10c may initiate the GNSS acquisition process to establish the global position of the third user equipment 10c. As described herein, the first communication node 102a may continuously or periodically broadcast one or more GNSS signals. The third user equipment 10c may begin receiving one or more GNSS signals via the GNSS receiver 56 over the period of time.

In process block 134, the first user equipment 10a sends a request to the third user equipment 10c via sidelink to determine if GNSS link resources are being utilized, similar to process block 128. For example, the first user equipment 10a may send a request using the sidelink to the third user equipment 10c to determine if communication with the first communication network 100a is occurring. In this way, the first user equipment 10a may ensure that initiating communication with the second communication network 100b may not cause performance degradation to neighboring user equipment 10.

In process block 136, the third user equipment 10c responds via sidelink that GNSS link acquisition sources are being utilized. For example, the third user equipment 10c may send an indication to the first user equipment 10a using the sidelink indicating that communication with the first communication network 100a is occurring. Since the first frequency band for communicating with the first communication network 100a are different from the third frequency band used for the sidelink communications, the third user equipment 10c may communicate with the first communication network 100a and the first user equipment 10a at a same time (e.g., concurrently or simultaneously). That is, the third user equipment 10c may continue to receive GNSS signals on the first frequency bands (e.g., an L1 frequency band of 1550-1600 MHz, an L2 frequency band of 1200-1300MHz, and/or an L5 frequency band of 1100-1200 MHz) and send sidelink communications on the sidelink frequency band (e.g., third frequency band of 2-6 GHz).

In process block 138, the third user equipment 10c concludes the GNSS acquisition process, similar to process block 126. After the period of time, the third user equipment 10c may receive one or more wireless signals from the first communication network 100a. The third user equipment 10c may determine the global position based on the one or more wireless signals and terminate communication with the first communication network 100a. In other words, the third user equipment 10c may stop receiving GNSS signals from the first communication node 102a. The third user equipment 10c may send an indication to the first user equipment 10a indicating that communication with the first communication network 100a is not being performed.

In certain instances, the third user equipment 10c may send an indication to the first user equipment 10a indicating that communication with the first communication network 100a is being performed. In response to receiving the indication, the first user equipment 10a may wait for a period of time T in process block 140. That is, the first user equipment 10a may delay communication with the second communication network 102b to reduce or eliminate signal interference between the user equipment 10a-c. As such, it may be beneficial for the first user equipment 10a to "back off' and wait for the period of time T for the third user equipment 10c to finish communication with the first communication network 100a (e.g., conclude the GNSS acquisition process). The period of time T may be a random amount of time, a pre-determined amount of time determined as part of the configuration parameters, an estimated amount of time to acquire GNSS signals, or the like. While the first user equipment 10a waits, the third user equipment 10c may conclude the GNSS acquisition process (as described in process block 139).

After waiting for the period of time T, in process block 142, the first user equipment 10a may send a request to the third user equipment 10c via sidelink to determine if GNSS link resources are being utilized. In this way, communication with the first communication network 100a may be prioritized over communication with the second communication network 100b.

In process block 144, the third user equipment 10c responds via sidelink that GNSS link resources are not being utilized. For example, the third user equipment 10c may send an indication to the first user equipment 10a using the sidelink frequency band indicating that GNSS link resources are not being utilized, similar to process block 130. In certain instances, the third user equipment 10c may continue to communicate with the first communication network 100a and send an indication to the first user equipment 10a using the sidelink frequency indicating that GNSS link resources are being utilized. In response to receiving the indication, the first user equipment 10a may "back off" and wait for the period of time T. Then, the method may return to process block 140 and the first user equipment 10a may send the request using the sidelink to the third user equipment 10c to determine if GNSS link resources are being utilized.

If the third user equipment 10c is not utilizing GNSS link resources, then the first user equipment 10a establishes connection with the second communication network 100b in process block 146. For example, the first user equipment 10a may transmit or receive a signal associated with emergency text messaging, emergency voice calling, acknowledgement messaging, video streaming, via the transceiver 30, to the second communication network 100b, Internet browsing. In this manner, the method 120 may coordinate timing of neighboring user equipment 10 attempting to communicate with the first communication network 100a and the second communication network 100b to reduce or eliminate data loss and/or performance degradation. In the method 170, the user equipment 10 may prioritize communication with the first communication network 100a over communication with the second communication network 100b. As such, crosstalk between the user equipment 10 due to close proximity may be reduced or eliminated.

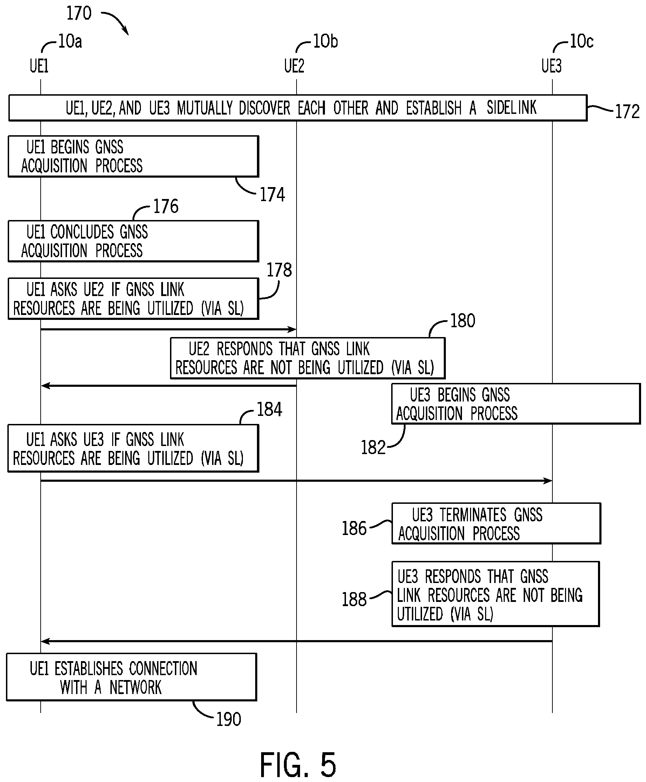

FIG. 5 is a flowchart of a method 170 for the two or more user equipment 10 to communicate with the one or more communication networks 100 by prioritizing a second communication network 100b, according to embodiments of the present disclosure. Before initiating communication with the second communication node 102b, the first user equipment 10a may send a request to each neighboring user equipment 10 asking if communication with the first communication network 100a is occurring. In response to receiving the request, neighboring user equipment 10b may stop communication with the first communication network 100a. As such, the first user equipment 10a may initiate communication with the second communication 100b. Then, the first user equipment 10a may send an indication using the sidelink frequency band to the neighboring user equipment 10 that communication with the second communication network 100b may be completed and the neighboring user equipment 10 may resume communication with the first communication network 100a. In this way, communication with the second communication network 100b may be prioritized and timing of communications may be staggered such that signal interference may be reduced or eliminated.

Any suitable device (e.g., a controller) that may control components of the user equipment 10, such as the processor 12, may perform the method 170. In some embodiments, the method 170 may be implemented by executing instructions stored in a tangible, non-transitory, computer-readable medium, such as the memory 14 or storage 16, using the processor 12. For example, the method 170 may be performed at least in part by one or more software components, such as an operating system of the user equipment 10, one or more software applications of the user equipment 10, and the like. While the method 170 is described using steps in a specific sequence, it should be understood that the present disclosure contemplates that the described steps may be performed in different sequences than the sequence illustrated, and certain described steps may be skipped or not performed altogether.

In process block 172, the first user equipment 10a, the second user equipment 10b, and the third user equipment 10c mutually discover each other and establish a session via sidelink, similar to process block 122 described with respect to FIG. 4. Then, in process block 174 and 176, the first user equipment 10a begins the GNSS acquisition process and concludes the GNSS acquisition process in process block 176, similar to process block 126 described with respect to FIG. 4. In process blocks 178 and 180, the first user equipment 10a sends a request the second user equipment 10b via sidelink to determine if GNSS link resources are being utilized and the second user equipment 10b sends an indication to the first user equipment 10a via sidelink that GNSS link resources are not being utilized, similar to process blocks 128 and 130 described with respect to FIG. 4. In process block 182, the third user equipment 10c beings the GNSS acquisition process, similar to process block 132 described with respect to FIG. 4. In process block 184, the first user equipment 10a sends a request to the third user equipment 10c via sidelink to determine if GNSS link resources are being utilized, similar to process block 134 described with respect to FIG. 4.

As noted above, the user equipment 10a-c may prioritize communication with the second communication network 100b over communication with the first communication network 100a. When establishing the sidelink, the user equipment 10a-c may receive and/or determine one or more configuration parameters (e.g., between the multiple user equipment 10a-c), such as encrypted data, a period of time T, a network connector, a prioritized network, or the like. For example, the user equipment 10a-c may receive an indication identifying the communication with second communication 100b may be prioritized over the communication with the first communication network 100a. As such, in process block 186, the third user equipment 10c terminates the GNSS acquisition process in response to receiving the request from the first user equipment 10. For example, the third user equipment 10c may cause the GNSS receiver 56 to stop receiving the GNSS signals and/or deactivates or depowers the GNSS receiver 56. In another example, the third user equipment 10c may display a notification on the display 18 to receive an indication to terminate the GNSS acquisition. In response to terminating the GNSS acquisition, the third user equipment 10c sends an indication to the first user equipment 10a via the sidelink indicating that GNSS link resources are not being utilized in process block 188. For example, the third user equipment 10c may send an indication using the sidelink frequency band to the first user equipment 10a indicating that communication with the first communication network 100a is not being performed.

In process block 190, the first user equipment 10a establishes connection with the second communication network 100b, similar to process block 146 described with respect to FIG. 4. Additionally or alternatively, the third user equipment 10c may wait the period of time T before resuming communication with the first communication network 100a. As described herein, the configuration parameters may indicate the period of time T for delaying communication with the first communication network 100a. In another example, the first user equipment 10a may send an indication to the third user equipment 10c using the sidelink indicating that communication with the second communication network 100b is not being performed. The third user equipment 10c may resume communication with the first communication network 100a in response to receive the indication. In this manner, the third user equipment 10c may save battery power by temporarily stopping communication with the first communication network 100a while the first user equipment 10a communicates with the second communication network 100b. Further, signal interference may be reduced or eliminated by coordinating communication timing between the user equipment 10a-c.

In certain instances, the first user equipment 10a may communicate with the second communication network 100b, then the second user equipment 10b may communicate with the second communication network 100b, followed by the third user equipment 10c (e.g., in a round robin fashion). By coordinating timing for communication, the user equipment 10 may preserve battery power and reduce or eliminate signal interference.

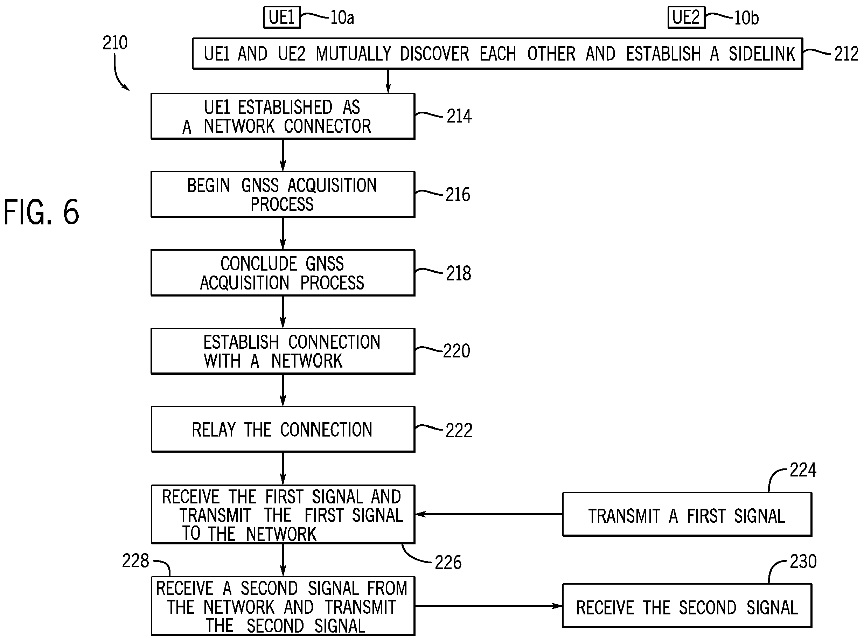

FIG. 6 is a flowchart of a method 210 for the two or more user equipment 10 to communicate with the second communication network 100b by relaying wireless signals through a network connector, according to embodiments of the present disclosure. In an embodiment, the first user equipment 10a may establish a connection for communication with the first communication network 100a and/or the second communication network 100b. Instead of having each neighboring user equipment 10 also spend time and battery power to communicate with the network 100, the first user equipment 10a may be determined as a network connector and relay wireless signals between the neighboring user equipment 10 and the second communication network 100b. For example, the first user equipment 10a may be determined as the network connector and the second user equipment 10b may transmit or receive wireless signals from the second communication network 100b from the first user equipment 10a using the sidelink. In this way, the first user equipment 10a may act as an intermediary device used for communication and the second user equipment 10b may save battery power by avoiding connecting with the second communication network 100b.

The neighboring user equipment 10 may include user equipment 10 within close proximity to the first user equipment 10a (e.g., such that communications of the neighboring user equipment 10 may interfere with communications of the user equipment 10, and vice versa). When establishing a sidelink with the neighboring user equipment 10 (e.g., including the second user equipment 10b), the first user equipment 10a may be designated as the network connector. In particular, the first user equipment 10a may relay one or more wireless signals to the second communication network 100b using the second frequency from the one or more neighboring user equipment 10 using the sidelink frequency, and/or relay one or more wireless signals from the second communication network 100b using the second frequency to the one or more neighboring user equipment 10 using the sidelink frequency. In this way, the one or more neighboring user equipment 10 may preserve battery power by avoiding connecting to the second communication network 100b and/or reduce or eliminate signal interference caused by communicating with the communication networks 100 while in close proximity to other user equipment 10.

Any suitable device (e.g., a controller) that may control components of the user equipment 10, such as the processor 12, may perform the method 210. In some embodiments, the method 210 may be implemented by executing instructions stored in a tangible, non-transitory, computer-readable medium, such as the memory 14 or storage 16, using the processor 12. For example, the method 210 may be performed at least in part by one or more software components, such as an operating system of the user equipment 10, one or more software applications of the user equipment 10, and the like. While the method 210 is described using steps in a specific sequence, it should be understood that the present disclosure contemplates that the described steps may be performed in different sequences than the sequence illustrated, and certain described steps may be skipped or not performed altogether.

In process block 212, the first user equipment 10a and the second user equipment 10b may mutually discover each other and establish a sidelink (e.g., sidelink session), similar to process block 122 described with respect to FIG. 4. As part of the configuration parameters, the user equipment 10 may designate a network connector (e.g., a user equipment 10) to communicate with the communication networks 100 and relay communications to the neighboring user equipment 10. The network connector may include or be determined based on one or more operating characteristics (e.g., a battery state-of-charge, power, or percentage, a receive signal quality, a receive signal power, or the like) of the user equipment 10. For example, the network connector may include the user equipment 10 with an increased or highest battery percentage and/or an increased or strongest signal quality among the user equipment 10 of the sidelink. Additionally or alternatively, the network connector may be designated based on an indication. In some embodiments, the user equipment 10 may have previously connected to the second communication network 100b and saved one or more parameters associated with the communication. For example, the user equipment 10 may store a signal quality associated with the second communication network 100b and/or the second communication node 102b. In certain instances, the network connector may be determined in real time (or near real time). For example, the user equipment 10 may communicate with the second communication network 100b and measure a signal characteristic, such as a signal power or quality (e.g., Reference Signal Received Power (RSRP), signal-to-noise ratio (SNR), signal-to-interference & noise ratio (SINR)) related to the communications. The user equipment 10a, 10b may share the signal characteristic via the sidelink to compare receive signal characteristics. For example, the first user equipment 10a may have an increased or stronger signal characteristic in comparison to the signal characteristic of the second user equipment 10b. As such, the first user equipment 10a may designated as the network connector. Any or all operating characteristics (e.g., a battery power or percentage, a receive signal quality, a receive signal power) of the user equipment 10 may be used to determine the network connector. Additionally, the processor 12 may implement a weighting system to apply a weight to each of the operating characteristics of each user equipment 10, and then sum the weighted operating characteristics for each user equipment 10. The processor 12 may then determine or designate the user equipment 10 with the greatest summed weighted operating characteristics as the network connector.

In process block 214, the first user equipment 10a is established as the network connector. For example, the first user equipment 10a may have an increased or strongest signal quality, an increased or highest battery percentage, or may be determined based on an indication. As another example, a notification may be displayed on the display 18a of the first user equipment 10a and the first user equipment 10a may receive an indication to be the network connector. It should be noted that either the first user equipment 10a or the second user equipment 10b (or any other user equipment 10 coupled via the sidelink) may determine the network connector.

In process block 216, the first user equipment 10a begins the GNSS acquisition process, similar to process blocks 124 described with respect to FIG. 4. In process block 218, the first user equipment 10a concludes the GNSS acquisition process, similar to process block 126 described with respect to FIG. 4. For example, the first user equipment 10a may determine the global position based on the acquired GNSS signals. In process block 220, the first user equipment 10a establishes a connection with the second communication network 100b, similar to process block 146 described with respect to FIG. 4.

In process block 222, the first user equipment 10a may relay communication to the second communication network 100b. That is, instead of directly communicating with the second communication network 100b, the second user equipment 10b may communicate with the second communication network 100b via the first user equipment 10a. For example, the first user equipment 10a may relay connection elements (e.g., system information, downlink data, frequency bands) using the sidelink frequency to the second user equipment 10b.

In process block 224, the second user equipment 10b transmits a first signal to the first user equipment 10a. For example, the second user equipment 10b may use the sidelink frequency to send the first signal to the first user equipment 10a. Additionally or alternatively, the second user equipment 10b may indicate that the first signal may be relayed to the second communication network 100b.

In process block 226, the first user equipment 10a receives the first signal and transmits the first signal to the second communication network 102b. For example, the first user equipment 10a may receive the first signal on the sidelink frequency from the second user equipment 10b and transmit the first signal on the second frequency to the second communication network 100b. As described herein, the sidelink frequency used for sidelink communications may be sufficiently far from the second frequency used for communication with the second communication network 100b such that signal interference may not occur. As such, communication between the user equipment 10 and communication with the communication networks 100 may occur in parallel.

In process block 228, the first user equipment 10a receives a second signal from the second communication network 100b and transmits the second signal to the second user equipment 10b. For example, the first user equipment 10a receives the second signal on the second frequency associated with the second communication network 100b, and transmits the second signal to the second user equipment 10b using the sidelink frequency. In process block 230, the second user equipment 10b receives the second signal on the sidelink frequency. For example, the second user equipment 10b may receive the second signal from the first user equipment using the sidelink frequency. In this way, the second user equipment 10b may communicate with the second communication network 100b without directly transmitting or receiving signals to and from the second communication network 100b. Moreover, the second user equipment 10b may preserve battery power by having the network connector (e.g., the first user equipment 10a) relay the communication. Furthermore, crosstalk between the user equipment 10 may be reduced or eliminated by designating one user equipment 10 for communications with the second communication node 100b.

While the illustrated example includes the first user equipment 10a relaying communications to the second user equipment 10b, the first user equipment 10 may relay communications to any suitable number (e.g., three or more, four or more, five or more, ten or more, and so on) of user equipment 10. Advantageously, battery power for each user equipment may be preserved and signal interference may be reduced or eliminated. In certain instances, the group may designate two or more network connectors and each network connector may coordinate timing communications by implementing the back off and wait technique described with respect to FIG. 4. As such, any suitable number of network connectors may be used to relay communications to any suitable number of user equipment.

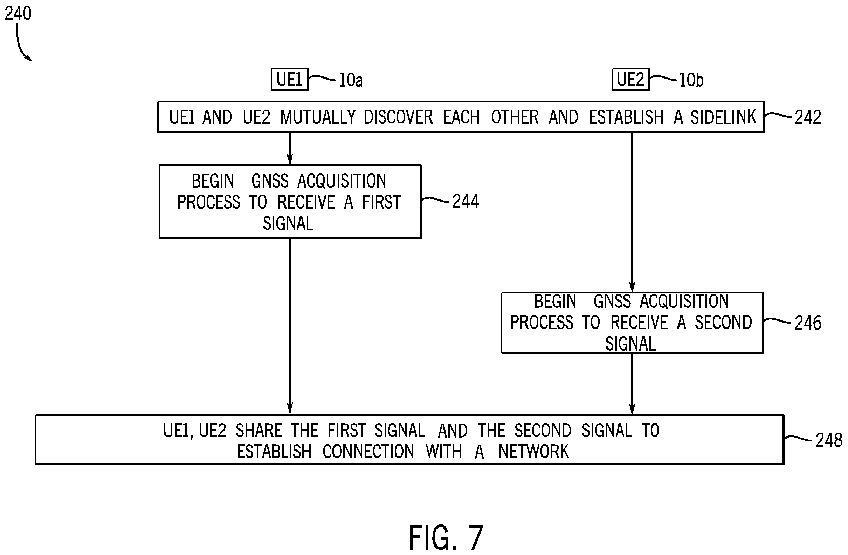

In an embodiment, the user equipment 10 may share the task of the GNSS acquisition and determining the global position. As described herein, the GNSS acquisition process may include receiving multiple GNSS signals over a period of time to accurately determine the global position. As such, it may beneficial to distribute the task among two or more user equipment 10 to reduce the amount of battery power and time spent on the process. FIG. 7 is a flowchart of a method 240 for the two or more user equipment 10 to coordinate and share the GNSS acquisition process, according to embodiments of the present disclosure.

Any suitable device (e.g., a controller) that may control components of the user equipment 10, such as the processor 12, may perform the method 240. In some embodiments, the method 240 may be implemented by executing instructions stored in a tangible, non-transitory, computer-readable medium, such as the memory 14 or storage 16, using the processor 12. For example, the method 240 may be performed at least in part by one or more software components, such as an operating system of the user equipment 10, one or more software applications of the user equipment 10, and the like. While the method 240 is described using steps in a specific sequence, it should be understood that the present disclosure contemplates that the described steps may be performed in different sequences than the sequence illustrated, and certain described steps may be skipped or not performed altogether.

In process block 242, the first user equipment 10a and the second user equipment 10b may mutually discover each other and establish a sidelink (e.g., a sidelink session), similar to process block 122, described with respect to FIG. 4. For example, the first user equipment 10a may receive an indication to establish the sidelink with the second user equipment 10b. When establishing the sidelink, the user equipment 10 may determine a number of GNSS signals to for each user equipment 10 of the sidelink to acquire during the GNSS acquisition process. For example, it may be determined that the first user equipment 10a receives two GNSS signals and the second user equipment 10b receives two GNSS signals.

In process block 244, the first user equipment 10a begins the GNSS acquisition process to receive a first signal, similar to process block 144 described with respect to FIG. 4. For example, the first user equipment 10a may receive a GNSS signal via the GNSS receiver 56; the GNSS signal may be indicative of timing data, location data, or other information needed to establish a global position of the first user equipment 10a. The GNSS signal may also GNSS search parameters, such as a rough timing, discovery satellite codes, and the like. In certain instance, the first user equipment 10a may receive a first GNSS signal and terminate the GNSS acquisition process. In other instances, the first user equipment 10a may receive one or more GNSS signals over a period of time. Still in another example, the first user equipment 10a may receive a best performing GNSS signal and terminate the GNSS acquisition process in response to receiving the GNSS signal.

In process block 246, the second user equipment 10b begins the GNSS acquisition process to receive a second signal. Since GNSS acquisition between multiple user equipment 10 may not cause signal interference, the first user equipment 10a and the second user equipment 10b may perform the GNSS acquisition at a same time (e.g., concurrently or simultaneously).

After concluding the GNSS acquisition process, the first user equipment 10a and the second user equipment 10b share the first signal and the second signal via sidelink to determine the global position in process block 248. Indeed, because the first user equipment 10a and the second user equipment 10b may be located in close proximity (e.g., within ten meters) of another, the global position of the first user equipment 10a may be the same or similar as that of the second user equipment 10b. As such the GNSS signals shared between the user equipment 10 may be used to determine the global position of the first user equipment 10a, the second user equipment 10b, or both.

In certain instances, the user equipment 10 may share the received signal (e.g., first signal, second signal) via sidelink and individually determine the global position. For example, the first user equipment 10a may send an indication via the sidelink to the second user equipment of the first signal and the second user equipment 10a may send an indication via the sidelink to the first user equipment 10a of the second signal. The first user equipment 10a may determine the global position based on the first signal and the second signal and the second user equipment 10b may also determine the global position based on the first signal and the second signal. In other instances, a designated user equipment 10 (e.g., determined using a similar or same process as the network connector described with respect to FIG. 6) may receive the first signal and/or the second signal to determine the global position. For example, the second user equipment 10b may be the designated user equipment 10 and receive the first signal via the sidelink from the first user equipment 10a. The second user equipment 10b, as the designated user equipment 10, may determine the global position and send an indication of the global position via the sidelink to the first user equipment. In this way, the use equipment 10 may save battery power by sharing the task of GNSS acquisition. Further, the first user equipment 10a may save battery power by avoiding determining the global position, rather the first user equipment 10a may receive the global position via the sidelink from the second user equipment 10b. In this way, the user equipment 10 may improve or optimize the GNSS signal acquisition process and battery life.

While the illustrated example includes the first user equipment 10a and the second user equipment 10b, any suitable number of user equipment 10 may share the GNSS acquisition process. Further, each user equipment 10 may each receive any suitable number of GNSS signals. For example, four user equipment 10 may each receive one GNSS signal and share the GNSS signal via the sidelink. Indeed, a greater number of GNSS signals may allow the user equipment 10 to determine a more precise global position. In another example, six user equipment 10 may each receive two GNSS signals and share the GNSS signals to the network connector and the network connector may determine the global position. Indeed, three or more, five or more, eight or more, and so on, user equipment 10 may coordinate and share the GNSS acquisition process to establish the global position. Furthermore, sharing GNSS signals between the user equipment 10 may save both battery power and time as each user equipment 10 may decrease an amount of time and battery power spent searching for and acquiring the GNSS signals.

The specific embodiments described above have been shown by way of example, and it should be understood that these embodiments may be susceptible to various modifications and alternative forms. It should be further understood that the claims are not intended to be limited to the particular forms disclosed, but rather to cover all modifications, equivalents, and alternatives falling within the spirit and scope of this disclosure.

The techniques presented and claimed herein are referenced and applied to material objects and concrete examples of a practical nature that demonstrably improve the present technical field and, as such, are not abstract, intangible or purely theoretical. Further, if any claims appended to the end of this specification contain one or more elements designated as "means for [performing [a function]..." or "step for [performing [a function]... ", it is intended that such elements are to be interpreted under 35 U.S.C. 112(f). However, for any claims containing elements designated in any other manner, it is intended that such elements are not to be interpreted under 35 U.S.C. 112(f).

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Exemplary embodiments of the present disclosure are set out in the following items and articles:
1. A method, comprising:
   establishing, via processing circuitry of a first user equipment, communication with a second user equipment on a first frequency;
   transmitting, via a transmitter of the first user equipment and using the first frequency, a request to the second user equipment for an indication of whether communication on a second frequency is occurring; and
   establishing, via the transmitter and using the second frequency, a connection with a network based on the indication.
2. The method of item 1, comprising:
   determining, via the transmitter and using the first frequency, a network connector to establish the connection with the network;
   receiving, via a receiver of the first user equipment and using the first frequency, a signal from the second user equipment based on being the network connector; and
   transmitting, via the transmitter and using the second frequency, the signal to the network.
3. The method of item 2, wherein determining, via the transmitter and using the first frequency, the network connector comprises determining a higher battery life or a stronger signal characteristic between the first user equipment and the second user equipment.
4. The method of any of items 2-3, wherein establishing the determining, via the transmitter and using the first frequency, the network connector comprises
   displaying, via a display of the first user equipment, a pop-up requesting to be the network connector, and
   receiving, via the processing circuitry, an input indicative of being the network connector.
5. The method of any of items 2-4, comprising:
   receiving, via a receiver and using the second frequency, a second signal from the network; and
   transmitting, via the transmitter and using the first frequency, the second signal to the second user equipment.
6. The method of any of items 1-5, comprising:
   receiving, via a first receiver of the first user equipment and using the second frequency, one or more signals to establish a location;
   transmitting, via the transmitter and using the first frequency, the one or more signals to the second user equipment; and
   receiving, via a second receiver and using the first frequency, a second indication of the location established by the second user equipment.
7. The method of any of items 1-6, comprising:
   receiving, via a first receiver and using the second frequency, one or more signals to establish a location;
   receiving, via a second receiver and using the first frequency, a request from the first user equipment for a second indication as to whether communication on the second frequency is occurring; and
   deactivating the first receiver based on the second indication.
8. The method of item 7, wherein the second indication indicates that communication on the second frequency is not occurring, the method comprising continuing to operate the first receiver based on the second indication.
9. The method of any of items 1-8, wherein the first frequency is between two gigahertz (GHz) and six GHz, and the second frequency range is between 1100 megahertz (MHz) and 1700 MHz.
10. A tangible, non-transitory computer-readable medium, comprising computer-readable instructions that, when executed by processing circuitry, are configured to cause the processing circuitry of a first user equipment to
   establish communication with a second user equipment on a first frequency,
   transmit, via a transmitter of the first user equipment and using the first frequency, a first request to the second user equipment for an indication of whether communication on a second frequency is occurring, and
   establish, via the transmitter and using a second frequency, a connection with a network based on the indication.
11. The tangible, non-transitory computer-readable medium of item 10, wherein the instructions, when executed by the processing circuitry, are configured to cause the processing circuitry to
   receive, via a receiver of the first user equipment and using the first frequency, a second request from the second user equipment for the indication of whether communication on the second frequency is occurring, and
   terminate the connection with the network based on the second request.
12. The tangible, non-transitory computer-readable medium of any of items 10-11, wherein the indication indicates that communication on the second frequency is occurring, and the instructions, when executed by the processing circuitry, are configured to cause the processing circuitry to
   wait for a period of time based on the indication,
   after the period of time, transmit, via the transmitter and using the first frequency, the first request to the second user equipment for a second indication of whether communication on the second frequency is occurring,
   establish, via the transmitter using the second frequency, the connection with the network based on the second indication.
13. The tangible, non-transitory computer-readable medium of any of items 10-12, wherein the instructions, when executed by the processing circuitry, are configured to cause the processing circuitry to
   determine, via the transmitter and using the first frequency, a network connector to establish the connection with the network,
   transmit, via the transmitter using the first frequency, a first signal to the second user equipment based on not being the network connector, and
   receive, via the transmitter and using the first frequency, a second signal from the network through the second user equipment.
14. The tangible, non-transitory computer-readable medium of item 13, wherein the instructions, when executed by the processing circuitry, are configured to cause the processing circuitry to determine, via the transmitter and using the first frequency, the network connector to establish the connection with the network by determining a higher battery power or a better performing signal characteristic between the first user equipment and the second user equipment.
15. The tangible, non-transitory computer-readable medium of any of items 13-14, wherein the instructions, when executed by the processing circuitry, are configured to cause the processing circuitry to display, via a display of the first user equipment, a notification requesting to be the network connector.
16. The tangible, non-transitory computer-readable medium of any of items 10-15, wherein the instructions, when executed by the processing circuitry, are configured to cause the processing circuitry to
   receive, via a receiver of the first user equipment and using the second frequency, a first set of signals to establish a location,
   receive, via the receiver and on the first frequency, a second set of signals from the second user equipment to establish the location, and
   establish the location based on the first set of signals and the second set of signals.
17. The tangible, non-transitory computer-readable medium of item 16, wherein instructions, when executed by the processing circuitry, are configured to cause the processing circuitry to transmit, via the transmitter and using the first frequency, a second indication of the location to the second user equipment.
18. A user equipment, comprising:
   one or more antennas;
   a first receiver and a second receiver coupled to the one or more antennas;
   a transmitter coupled to one or more antennas; and
   processing circuitry communicatively coupled to the transmitter and the receiver and configured to
      transmit a first request having a first frequency to establish communication with a first user equipment using the transmitter,
      transmit a second request having the first frequency to the first user equipment for an indication of whether communication on a second frequency is occurring using the transmitter, and
      establish a connection having the second frequency with a first communication node based on the indication.
19. The user equipment of item 18, wherein the processing circuitry is configured to
   wait a period of time based on the indication indicating that the communication on the second frequency is occurring, and
   after the period of time, transmit the second request having the first frequency to the first user equipment using the transmitter.
20. The user equipment of any of items 18-19, wherein the processing circuitry is configured to
   receive a signal having the first frequency from the first user equipment using the first receiver based on being designated as a network connector, and
   transmit the signal having the second frequency to the first communication node using the transmitter.

## Claims

1. A method, comprising:
establishing, via processing circuitry of a first user equipment, communication with a second user equipment on a first frequency;
transmitting, via a transmitter of the first user equipment and using the first frequency, a request to the second user equipment for an indication of whether communication on a second frequency is occurring; and
establishing, via the transmitter and using the second frequency, a connection with a network based on the indication.

2. The method of claim 1, comprising:
determining, via the transmitter and using the first frequency, a network connector to establish the connection with the network;
receiving, via a receiver of the first user equipment and using the first frequency, a signal from the second user equipment based on being the network connector; and
transmitting, via the transmitter and using the second frequency, the signal to the network.

3. The method of claim 2, wherein determining, via the transmitter and using the first frequency, the network connector comprises determining a higher battery life or a stronger signal characteristic between the first user equipment and the second user equipment.

4. The method of any of claims 2-3, wherein establishing the determining, via the transmitter and using the first frequency, the network connector comprises
displaying, via a display of the first user equipment, a pop-up requesting to be the network connector, and
receiving, via the processing circuitry, an input indicative of being the network connector.

5. The method of any of claims 2-4, comprising:
receiving, via a receiver and using the second frequency, a second signal from the network; and
transmitting, via the transmitter and using the first frequency, the second signal to the second user equipment.

6. The method of any of claims 1-5, comprising:
receiving, via a first receiver of the first user equipment and using the second frequency, one or more signals to establish a location;
transmitting, via the transmitter and using the first frequency, the one or more signals to the second user equipment; and
receiving, via a second receiver and using the first frequency, a second indication of the location established by the second user equipment.

7. The method of any of claims 1-6, comprising:
receiving, via a first receiver and using the second frequency, one or more signals to establish a location;
receiving, via a second receiver and using the first frequency, a request from the first user equipment for a second indication as to whether communication on the second frequency is occurring; and
deactivating the first receiver based on the second indication.

8. The method of claim 7, wherein the second indication indicates that communication on the second frequency is not occurring, the method comprising continuing to operate the first receiver based on the second indication.

9. The method of any of claims 1-8, wherein the first frequency is between two gigahertz (GHz) and six GHz, and the second frequency range is between 1100 megahertz (MHz) and 1700 MHz.

10. A tangible, non-transitory computer-readable medium, comprising computer-readable instructions that, when executed by processing circuitry, are configured to cause the processing circuitry of a first user equipment to
establish communication with a second user equipment on a first frequency,
transmit, via a transmitter of the first user equipment and using the first frequency, a first request to the second user equipment for an indication of whether communication on a second frequency is occurring, and
establish, via the transmitter and using a second frequency, a connection with a network based on the indication.

11. The tangible, non-transitory computer-readable medium of claim 10, wherein the instructions, when executed by the processing circuitry, are configured to cause the processing circuitry to
receive, via a receiver of the first user equipment and using the first frequency, a second request from the second user equipment for the indication of whether communication on the second frequency is occurring, and
terminate the connection with the network based on the second request.

12. The tangible, non-transitory computer-readable medium of any of claims 10-11, wherein the indication indicates that communication on the second frequency is occurring, and the instructions, when executed by the processing circuitry, are configured to cause the processing circuitry to
wait for a period of time based on the indication,
after the period of time, transmit, via the transmitter and using the first frequency, the first request to the second user equipment for a second indication of whether communication on the second frequency is occurring,
establish, via the transmitter using the second frequency, the connection with the network based on the second indication.

13. A user equipment, comprising:
one or more antennas;
a first receiver and a second receiver coupled to the one or more antennas;
a transmitter coupled to one or more antennas; and
processing circuitry communicatively coupled to the transmitter and the receiver and configured to
transmit a first request having a first frequency to establish communication with a first user equipment using the transmitter,
transmit a second request having the first frequency to the first user equipment for an indication of whether communication on a second frequency is occurring using the transmitter, and
establish a connection having the second frequency with a first communication node based on the indication.

14. The user equipment of claim 13, wherein the processing circuitry is configured to
wait a period of time based on the indication indicating that the communication on the second frequency is occurring, and
after the period of time, transmit the second request having the first frequency to the first user equipment using the transmitter.

15. The user equipment of any of claims 13-14, wherein the processing circuitry is configured to
receive a signal having the first frequency from the first user equipment using the first receiver based on being designated as a network connector, and
transmit the signal having the second frequency to the first communication node using the transmitter.
